# EUROPEAN PATENT APPLICATION

(11) **EP 4 000 976 A1**
(43) Date of publication of application: **25.05.2022**
(21) Application number: 21204031.5
(22) Date of filing: 21.10.2021
(51) Int. Cl.: B60H 1/32, B60P 3/20, F02D 29/06, F02D 41/02, F02D 29/02

(54) **TRANSPORT REFRIGERATION UNIT WITH VARIABLE-SPEED ELECTRIC REFRIGERATION DRIVE AND VARIABLE-SPEED DIESEL ENGINE SYNCHRONOUS GENERATOR POWER SOURCE**

(30) Priority: 19.11.2020 US 202063115909 P
(71) Applicant: Carrier Corporation, Palm Beach Gardens, FL 33418 (US)
(72) Inventor: SENF, Ray, Syracuse, 13221 (US)
(74) Representative: Dehns

(57) **Abstract**

A transport refrigeration (TRU) system (301) is provided and includes an air management system (340), a compressor (330), a generator (310) which generates alternating current (AC) from operations of an engine (302) to power operations of the air management system (340) and the compressor (330) and an AC inverter (412, 421) operably interposed between the generator (310) and the compressor (330) to decouple a drive frequency of the compressor from a frequency of the generator.

## Description

### BACKGROUND

The invention relates to transport refrigeration units (TRUs) and, in particular, to a TRU with a variable-speed electric refrigeration drive and a variable-speed diesel engine synchronous generator power source.

TRUs for trucks and trailer are evolving toward being configured for full electrical operations. To this end, higher efficiency systems will ultimately need to be developed to enable such full electrical operations. In the meantime, interim solutions that do not involve, for example, battery only electrification, need to be developed that exceed the capabilities of current systems designed to run synchronously. Synchronous systems are characterized in that high engine speed results in high capacity, high airflow and high fuel consumption.

### SUMMARY

According to a first aspect of the invention, a transport refrigeration (TRU) system is provided and includes an air management system, a compressor, a generator which generates alternating current (AC) from operations of an engine to power operations of the air management system and the compressor and an AC inverter operably interposed between the generator and the compressor to decouple a drive frequency of the compressor from a frequency of the generator.

Optionally, the compressor includes a variable speed compressor.

Optionally, the air management system includes parallel air management systems.

Optionally, the engine is run at a lowest possible engine speed for needed power and compressor speed is varied based on capacity demand.

Optionally, the engine continues to run at the lowest possible engine speed as the capacity demand increases to match a torque demanded from the compressor.

Optionally, engine speed increases as the engine approaches a maximum available power.

According to a second aspect of the invention, a method of operating a transport refrigeration unit (TRU) system including an air management system, a compressor, a generator which generates alternating current (AC) from operations of an engine to power operations of the air management system and the compressor and an AC inverter operably interposed between the generator and the compressor is provided. The method includes decoupling a drive frequency of the compressor from a frequency of the generator.

Optionally, the decoupling of the drive frequency of the compressor from the frequency of the generator includes operating the compressor at a variable speed to meet a demand, operating an engine at a lowest possible speed to provide power for the compressor, maintaining operations of the engine at the lowest possible speed as the demand increases and increasing an engine speed of the engine as available power of the engine approaches a maximum.

According to a third aspect of the invention, a method of operating a transport refrigeration unit (TRU) system in which a drive frequency of a compressor is decoupled from a frequency of a generator is provided. The method includes operating the compressor at a variable speed to meet a demand, operating an engine at a lowest possible speed to provide power for the compressor, maintaining operations of the engine at the lowest possible speed as the demand increases and increasing an engine speed of the engine as available power of the engine approaches a maximum.

Optionally, the operating of the engine includes determining whether the engine is operating within a desired load range.

Optionally, the operating of the engine further includes maintaining an engine speed if the engine is operating within the desired load range.

Optionally, the operating of the engine further includes increasing an engine speed if the engine is not operating within the desired load range and more engine power is required.

Optionally, the operating of the engine further includes reducing engine power and decreasing engine speed if the engine is not operating within the desired load range and more engine power is not required.

Optionally, the operating of the compressor includes determining whether a TRU temperature error is greater than zero.

Optionally, the operating of the compressor further includes decreasing a compressor drive frequency if the TRU temperature error is not greater than zero and not equal to zero.

Optionally, the operating of the compressor further includes decreasing a compressor drive frequency if the TRU temperature error is greater than zero and an engine load is greater than a maximum load range.

Optionally, the operating of the compressor further includes maintaining the compressor drive frequency if the TRU temperature error is not greater than zero and is equal to zero.

Optionally, the operating of the compressor further includes maintaining the compressor drive frequency if the TRU temperature error is greater than zero and if the engine load is not greater than a maximum load range, more engine power has been requested and engine power has not been increased.

Optionally, the operating of the compressor further includes maintaining the compressor drive frequency if the TRU temperature error is greater than zero and if the engine load is not greater than a maximum load range, more engine power has been requested, engine power has been increased and the compressor is at a maximum drive frequency.

Optionally, the operating of the compressor further includes increasing a compressor drive frequency if the TRU temperature error is greater than zero and if the engine load is not greater than a maximum load range, more engine power has been requested, engine power has been increased and the compressor is not at a maximum drive frequency.

Additional features and advantages are realized through the techniques of the present disclosure. For a better understanding of the disclosure with the advantages and the features, refer to the description and to the drawings.

### BRIEF DESCRIPTION OF THE DRAWINGS

For a more complete understanding of this invention, reference is now made to the following brief description, taken in connection with the accompanying drawings and detailed description, which are provided by way of example only and wherein like reference numerals represent like parts:
FIG. 1 is a side view of a truck/trailer with a TRU;
FIG. 2 is a schematic illustration of a vapor compression cycle of the TRU of FIG. 1;
FIG. 3 is a schematic illustration of a TRU system;
FIG. 4 is a schematic illustration of a TRU system;
FIG. 5 is a flow diagram illustrating a method of operation of a TRU system; and
FIG. 6 is a graphical illustration of a performance of the TRU system operated according to the method of FIG. 5.

### DETAILED DESCRIPTION

As will be described below, a refrigeration compressor drive frequency is decoupled from a primary diesel generator frequency using a refrigeration compressor variable speed AC inverter that is located between a 3-phase diesel synchronous generator and the compressor. The approach will be to allow the engine to run at lowest possible engine speeds for needed power while allowing the refrigeration system to vary operations of the primary compressor and if needed fan speeds based on capacity demands. As refrigeration power demand increases, the engine can stay in a lowest speed required to match torque demanded from the compressor and fan systems with intent of staying in lowest speed required to match demand of the refrigeration or compressor system. If engine power is approaching a maximum available power, the engine will increase in rpm to thereby increase available engine power to thus supply the AC inverter with power needed for the refrigeration compressor.

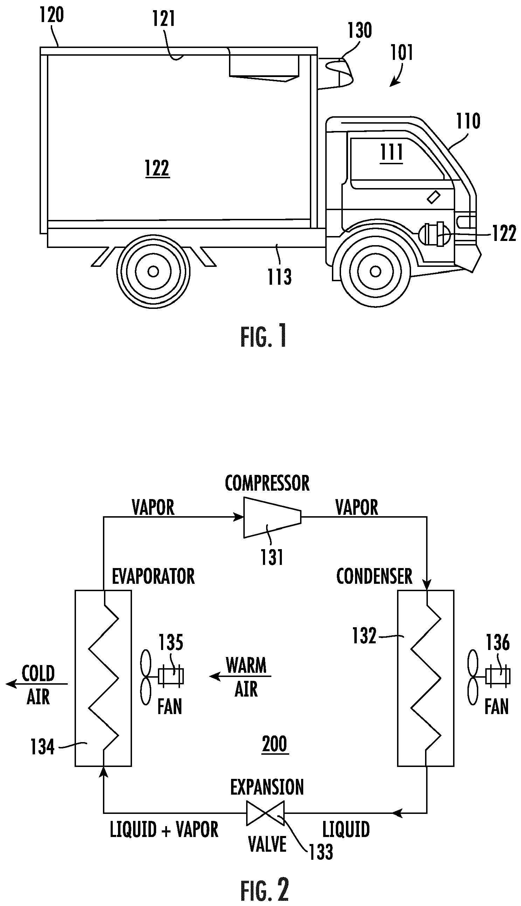

With reference to FIGS. 1 and 2, a truck or trailer 101 is provided and includes a vehicle portion 110, a trailer portion 120 and a TRU 130. The vehicle portion 110 includes a cabin 111, which is supportive of an engine 112 and which is configured to accommodate an operator and one or more passengers, and a bed 113 in the rear of the cabin 111. In some cases, the engine 112 can be provided as a diesel engine or another similar type of internal combustion engine. For clarity and brevity, the following description will relate to the case of the engine 112 being an internal combustion diesel engine. The trailer portion 120 can be seated on the bed 113 and has a body 121 that is formed to define an interior 122 in which items being transported or shipped can be stored. The TRU 130 is operably coupled directly or indirectly to and is configured to be seated upon the body 121 of the trailer portion 120.

The TRU can include an engine and is configured to generate a cooling (or heating) airflow that can be directed into the interior 122 so as to control at least a temperature of the interior 122. In this way, in an exemplary case in which the items being transported are perishable and need to be refrigerated (or heated), the TRU 130 can maintain the interior 122 in a refrigerated (or heated) state even during hot (or cold) days.

As shown in FIG. 2, the TRU 130 can be operated according to a vapor compression cycle 200 and includes a compressor 131, a condenser 132, an expansion valve 133, an evaporator 134 and fans 135 and 136. The compressor 131 compresses vapor and outputs the compressed vapor to the condenser 132. Within the condenser 132, the compressed vapor is condensed into a liquid, while the fan 136 blows air over and through the condenser 132, which is directed to the expansion valve 133. The liquid is expanded through the expansion valve 133 into a mixture of liquid and vapor that is directed to the evaporator 134. The mixture of liquid and vapor then flows through coils of the evaporator 134 while the fan 135 blows air (i.e., warm air) over the coils whereupon the liquid removes heat from the air and turns into vapor. This cools the air so that the air can be directed into the interior 122 as cooled air. The vapor is then flown into the compressor 131.

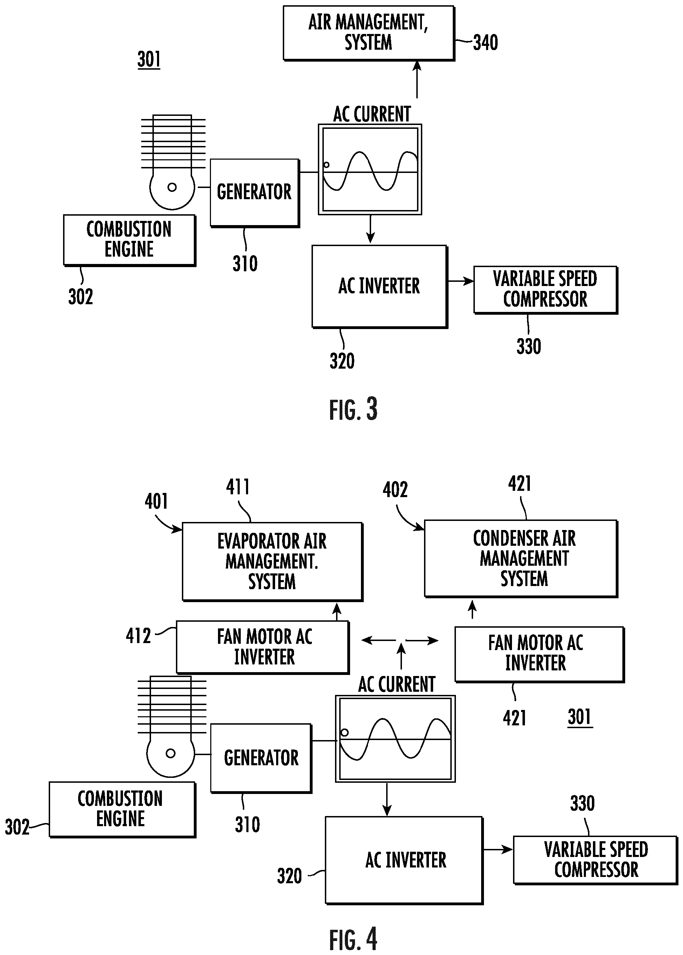

With continued reference to FIGS. 1 and 2 and with additional reference to FIGS. 3 and 4, a TRU system 301 is provided for handling certain operations of the TRU 130 of FIGS. 1 and 2. The TRU system 301 can include an onboard engine 302 or, in some cases, can be directly or indirectly connected to another engine, such as the engine 112 of FIG. 1. The following description will relate to the cases in which the engine 302 is an onboard engine of the TRU system 301.

The TRU system 301 further includes a generator 310, an alternating current (AC) inverter 320 and a variable speed compressor 330. The TRU system 301 further includes an air management system 340 (see FIG. 3) and/or parallel air management systems 401 and 402 (see FIG. 4). The generator 310 can include or be provided as a 3-phase diesel synchronous generator. The generator 310 can be directly or indirectly driven by the engine 302 to generate electricity and power for use by the variable speed compressor 330 and the air management system 340 of FIG. 3 and/or the parallel air management systems 401 and 402 of FIG. 4. The AC inverter 320 can include or be provided as a refrigeration compressor variable speed AC inverter. The air management system (e.g., the parallel air management system 401 and 402) can include or be provided as one or more fan motor AC inverter(s) 412, 421 (i.e., for driving the fans 135 and 136 of FIG. 2). The air management system (i.e., when configured as a parallel air management system 401 and 402) may include an evaporator air management system 411 in series with the fan motor AC inverter 410, and a condenser air management system 421 in series with the fan motor AC inverter 420.

The TRU system 301 of FIGS. 3 and 4 are thus characterized in that the refrigeration compressor drive frequency of at least the variable speed compressor 330 is decoupled from the primary diesel generator frequency of the generator 310 using the AC inverter 320 which is located or operably disposed between the generator 310 and the variable speed compressor 330. The TRU system 301 allows the engine 302 to run at a lowest possible engine speed for needed power while varying compressor and fan speeds based on capacity demand. As refrigeration power demand increases, the engine 302 can stay in a lowest speed that is required to match torque demanded from the compressor 131 and the fans 135 and 136 with the intent of staying in a lowest speed required to match the demand. If engine power is approaching a maximum available power, the engine 302 will increase in rpm to thus increase available engine power and to supply the AC inverter 320 with sufficient power as needed for the compressor 131 and the fans 135 and 136.

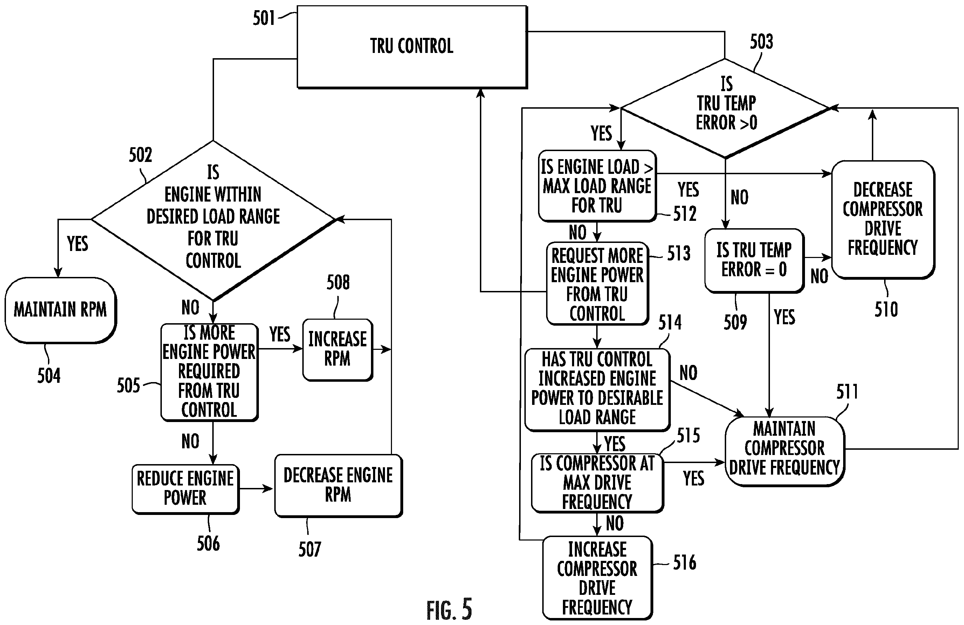

With continued reference to FIGS. 1-4 and with additional reference to FIG. 5, a method or scheme of operation of a TRU system, such as the TRU system 301 of FIGS. 3 and 4, is provided in accordance with embodiments. As shown in FIG. 5, the method or scheme includes a TRU control 501 that considers whether the engine 302 is within a desired load range for TRU control 502 as well as additional issues arising therefrom and whether a TRU temperature error is greater than zero 503 (i.e., whether a temperature within the interior 122 is at a target temperature or not) as well as additional issues arising therefrom.

If the engine 302 is within the desired load range for the TRU control, engine rpm is maintained 504. Conversely, if the engine 302 is not within the desired load range for the TRU control, it is determined whether more engine power is required from the TRU control 505 (see a determination of whether more engine power is requested at block 513 to be discussed below). If more engine power is not required, engine power is reduced 506 and engine rpm is decreased 507 and control reverts to considering whether the engine 302 is within a desired load range for TRU control 502. If more engine power is required, engine rpm is increased 508 and control reverts to considering whether the engine 302 is within a desired load range for TRU control 502.

If the TRU temperature error is not greater than zero, it is determined whether TRU temperature error equals zero 509. If the TRU temperature error does not equal zero, a compressor drive frequency of the compressor 131 is decreased 510 and control reverts to determining whether the TRU temperature error is greater than zero 503. If the TRU temperature error equals zero, the compressor drive frequency is maintained 511 and control reverts to determining whether the TRU temperature error is greater than zero 503.

If the TRU temperature error is greater than zero, it is determined whether engine load is greater than a maximum load range 512. If the engine load is greater than the maximum load range, the compressor drive frequency is decreased 510 and control reverts to determining whether the TRU temperature error is greater than zero 503. If the engine load is not greater than the maximum load range, more engine power is requested 513 and it is determined whether engine power has been increased to a desirable load range 514. If the engine power has not been increased to the desirable load range, the compressor drive frequency is maintained 511 and control reverts to determining whether the TRU temperature error is greater than zero 503. If the engine power has been increased to the desirable load range, it is determined whether the compressor 131 is at a maximum drive frequency 515. If the compressor 131 is at the maximum drive frequency, the compressor drive frequency is maintained 511 and control reverts to determining whether the TRU temperature error is greater than zero 503. If the compressor 131 is not at the maximum drive frequency, the compressor drive frequency is increased 516 and control reverts to determining whether the TRU temperature error is greater than zero 503.

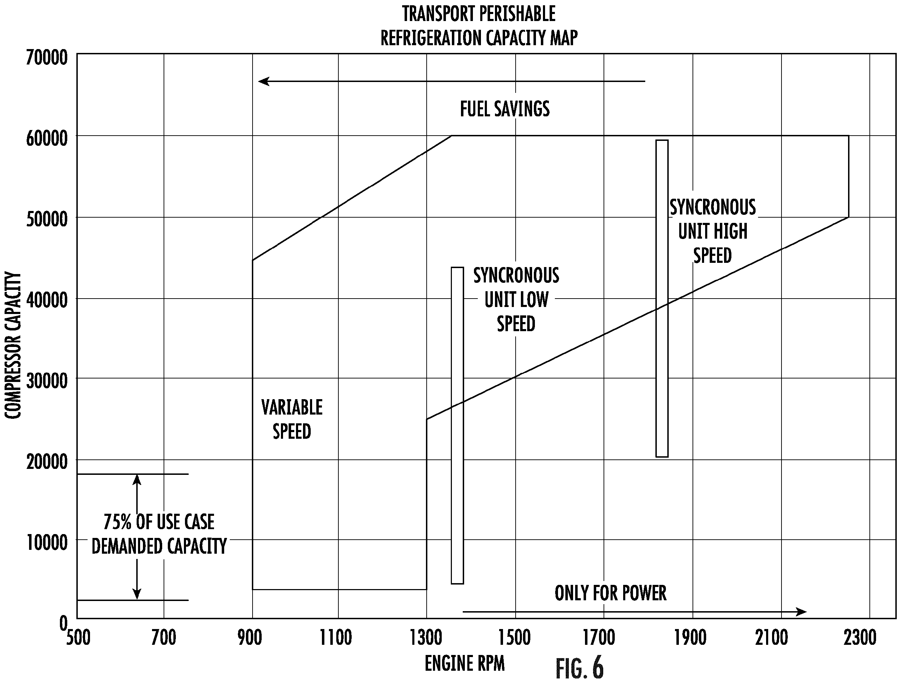

With reference to FIG. 6, a performance of the TRU system 301 of FIGS. 3 and 4 and operated according to the method or scheme of FIG. 5 is illustrated graphically. As shown in FIG. 6 it is apparent that an operational capability of the compressor 131 is greatly increased from low engine rpm to high engine rpm and from low compressor capacity to high compressor capacity resulting from the use of a variable speed compressor as compared to synchronous units.

Technical effects and benefits of the present disclosure are the provision of systems in which compressor operations are decoupled from primary diesel engine speed to thereby allow for maximized fuel efficiency gains arising from compressor capacity maximizations as needed with lowest possible engine speeds. The systems allow for maximum total efficiency BTUs/ lb_fuel as well as 75% of TRU run time in low-power conditions, which will allow for low fuel burn rates and reduced noise. The systems also allow for engines to run at peak torque for maximized refrigeration load as needed as well as smaller and less costly TRU engines with wide speed ranges of about 600-2500 rpm for example. Use of the systems can provide for cases in which high engine speeds would only be needed for short durations characterized by high power demand associated with high ambient conditions.

The corresponding structures, materials, acts, and equivalents of all means or step-plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope of the invention as set out on the appended claims. The embodiments were chosen and described in order to best explain the principles of the invention and the practical application, and to enable others of ordinary skill in the art to understand the invention for various embodiments with various modifications as are suited to the particular use contemplated.

While the preferred embodiments of the invention have been described, it will be understood that those skilled in the art, both now and in the future, may make various improvements and enhancements which fall within the scope of the claims which follow. These claims should be construed to maintain the proper protection for the invention.

The following clauses set out aspects of the invention which may or may not be presently claimed but which may form basis for future amendments and/or a divisional application.
1. A method of operating a transport refrigeration unit (TRU) system comprising an air management system, a compressor, a generator which generates alternating current (AC) from operations of an engine to power operations of the air management system and the compressor and an AC inverter operably interposed between the generator and the compressor, the method comprising:
   decoupling a drive frequency of the compressor from a frequency of the generator.
2. The method according to clause 1, wherein the decoupling of the drive frequency of the compressor from the frequency of the generator comprises:
   operating the compressor at a variable speed to meet a demand;
   operating an engine at a lowest possible speed to provide power for the compressor;
   maintaining operations of the engine at the lowest possible speed as the demand increases; and
   increasing an engine speed of the engine as available power of the engine approaches a maximum.

## Claims

1. A transport refrigeration (TRU) system (301), comprising:
an air management system (340);
a compressor (330);
a generator (310) which generates alternating current (AC) from operations of an engine (302) to power operations of the air management system (340) and the compressor (330); and
an AC inverter (412, 421) operably interposed between the generator (310) and the compressor (330) to decouple a drive frequency of the compressor (330) from a frequency of the generator (310).

2. The TRU system (301) according to claim 1, wherein the compressor (330) comprises a variable speed compressor.

3. The TRU system (301) according to claim 1 or 2, wherein the air management system comprises parallel air management systems (401, 402).

4. The TRU system (301) according to any preceding claim, wherein the engine (302) is run at a lowest possible engine speed for needed power and compressor speed is varied based on capacity demand;
optionally, wherein the engine (302) continues to run at the lowest possible engine speed as the capacity demand increases to match a torque demanded from the compressor (330); and
further optionally, wherein engine speed increases as the engine (302) approaches a maximum available power.

5. A method of operating the transport refrigeration unit (TRU) system (301) of any preceding claim, the method comprising:
decoupling a drive frequency of the compressor (330) from a frequency of the generator (310);
optionally, wherein the decoupling of the drive frequency of the compressor (330) from the frequency of the generator (310) comprises:
operating the compressor (330) at a variable speed to meet a demand;
operating an engine (302) at a lowest possible speed to provide power for the compressor (330);
maintaining operations of the engine (302) at the lowest possible speed as the demand increases; and
increasing an engine speed of the engine (302) as available power of the engine approaches a maximum.

6. A method of operating a transport refrigeration unit (TRU) system (301) in which a drive frequency of a compressor (330) is decoupled from a frequency of a generator (310), the method comprising:
operating the compressor (330) at a variable speed to meet a demand;
operating an engine (302) at a lowest possible speed to provide power for the compressor (330);
maintaining operations of the engine (302) at the lowest possible speed as the demand increases; and
increasing an engine speed of the engine (302) as available power of the engine approaches a maximum.

7. The method according to claim 6, wherein the operating of the engine (302) comprises determining whether the engine (302) is operating within a desired load range.

8. The method according to claim 7, wherein the operating of the engine (302) further comprises:
maintaining an engine speed if the engine (302) is operating within the desired load range; and/or
increasing an engine speed if the engine (302) is not operating within the desired load range and more engine power is required; and/or
reducing engine power and decreasing engine speed if the engine (302) is not operating within the desired load range and more engine power is not required.

9. The method according to any of claims 6 to 8, wherein the operating of the compressor (330) comprises determining whether a TRU temperature error is greater than zero.

10. The method according to claim 9, wherein the operating of the compressor (330) further comprises decreasing a compressor drive frequency if the TRU temperature error is not greater than zero and not equal to zero.

11. The method according to claim 9, wherein the operating of the compressor (330) further comprises decreasing a compressor drive frequency if the TRU temperature error is greater than zero and an engine load is greater than a maximum load range.

12. The method according to claim 9, wherein the operating of the compressor further comprises maintaining the compressor drive frequency if the TRU temperature error is not greater than zero and is equal to zero.

13. The method according to claim 9, wherein the operating of the compressor further comprises maintaining the compressor drive frequency if the TRU temperature error is greater than zero and if the engine load is not greater than a maximum load range, more engine power has been requested and engine power has not been increased.

14. The method according to claim 9, wherein the operating of the compressor further comprises maintaining the compressor drive frequency if the TRU temperature error is greater than zero and if the engine load is not greater than a maximum load range, more engine power has been requested, engine power has been increased and the compressor is at a maximum drive frequency.

15. The method according to claim 9, wherein the operating of the compressor further comprises increasing a compressor drive frequency if the TRU temperature error is greater than zero and if the engine load is not greater than a maximum load range, more engine power has been requested, engine power has been increased and the compressor is not at a maximum drive frequency.
